# EUROPÄISCHE PATENTSCHRIFT

(11) **EP 1 585 667 B1**
(45) Veröffentlichungstag und Bekanntmachung des Hinweises auf die Patenterteilung: **16.02.2011**
(21) Anmeldenummer: 03789199.1
(22) Anmeldetag: 10.12.2003
(51) Int. Cl.: B64G 1/40, F03H 1/00, H05H 15/00, H05H 1/54

(54) **IONENBESCHLEUNIGER-ANORDNUNG**
ION ACCELERATOR ARRANGEMENT
DISPOSITIF D'ACCELERATION D'IONS

(30) Priorität: 11.01.2003 DE 10300728
(43) Veröffentlichungstag der Anmeldung: 19.10.2005
(73) Patentinhaber: Thales Electron Devices GmbH, 89077 Ulm (DE)
(72) Erfinder: KORNFELD, Günter, 89275 Elchingen (DE); COUSTOU, Gregory, 45640 Sandillon (FR); KOCH, Norbert, 89073 Ulm (DE)
(74) Vertreter: Weber, Gerhard
(86) Internationale Anmeldenummer: PCT/EP2003/013988
(87) Internationale Veröffentlichungsnummer: WO 2004/064459

(56) Entgegenhaltungen:
- WO-A-00/01206
- WO-A-01/71185
- SCHMIDT D P ET AL: "A low-power, linear-geometry Hall plasma source with an open electron-drift" PLASMA SOURCES, SCIENCE AND TECHNOLOGY IOP PUBLISHING UK, Bd. 9, Nr. 1, Februar 2000 (2000-02), Seiten 68-76, XP002326380 ISSN: 0963-0252

## Beschreibung

Die Erfindung betrifft eine lonenbeschleuniger-Anordnung.

Ionenbeschleuniger-Anordnungen sind beispielsweise im Einsatz zur Oberflächenbehandlung, insbesondere in der Halbleitertechnologie, oder als Antrieb für Raumflugkörper. Ionen werden typischerweise aus einem neutralen Arbeitsgas für Antriebszwecke, insbesondere einem Edelgas erzeugt und beschleunigt. Zur Erzeugung und Beschleunigung von Ionen haben sich insbesondere zwei Bauprinzipien durchgesetzt.

Bei den Gitterbeschleunigern werden aus einem Plasma die positiv geladenen Ionen mittels einer Gitteranordnung, bei welcher ein erstes, an die Plasmakammer angrenzendes Gitter auf ein Anodenpotential und ein in Strahlaustrittsrichtung versetztes zweites Gitter auf einem negativeren Kathodenpotential liegen, abgezogen und zwischen den beiden Gittern elektrostatisch beschleunigt. Eine derartige Anordnung ist beispielsweise aus der US 3613370 bekannt. Durch Raumladungseffekte ist die Ionenstromdichte einer solchen Beschleunigeranordnung auf niedrige Werte begrenzt.

Eine andere Bauform sieht eine Plasmakammer vor, welche zum einen von einem elektrischen Feld zur Beschleunigung positiv geladener Ionen in Richtung einer Strahlaustrittsöffnung und zum anderen von einem Magnetfeld zur Führung von Elektronen, welche zur Ionisation eines neutralen Arbeitsgases dienen, durchsetzt ist. Seit längerer Zeit gebräuchlich sind insbesondere Beschleunigeranordnungen mit einer ringförmigen Plasmakammer, in welcher das Magnetfeld vorwiegend radial verläuft und Elektronen unter dem Einfluss derelektrischen und magnetischen Felder sich auf geschlossenen Driftbahnen bewegen. Eine derartige Beschleunigeranordnung ist beispielsweise aus der US 5 847 493 bekannt.

Eine hiervon theoretisch und praktisch erheblich unterschiedliche Ausführung eines Impuls-Plasmabeschleunigers, wie sie z. B. aus der DE 15 39 264 bekannt ist, sieht an entgegen gesetzten Seiten eines flachen Plasmakanal Elektrodenschienen vor, zwischen welchen durch impulsförmige Entladung in einem im Kanal befindlichen Arbeitsgas ein Strom quer zur Längsrichtung des Kanals fließt, wobei ein Plasma entsteht. Die Stromschleife mit Elektrodenschienen und Strom durch die Plasmakammer führt durch magnetische Verdrängung zum impulsartigen Ausstoß des ionisierten Gases.

Bei einem neuen Typ einer Ionenbeschleuniger-Anordnung des closedelectron-drift-Typs mit elektrischen und magnetischen Feldern in einer Plasmakammer zeigt das Magnetfeld eine besondere Struktur mit überwiegend zur Längsrichtung parallelem Feldverlauf in Längsabschnitten zweiter Art und überwiegend zur Längsrichtung senkrechtem, insbesondere radialem Verlauf in Längsabschnitten erster Art, welche insbesondere einen auch als cusp bezeichneten Verlauf des Magnetfelds zeigen. Die Anordnung ist vorzugsweise mehrstufig aufgebaut mit alternierend aufeinanderfolgenden Längsabschnitten erster und zweiter Art. Derartige Ionenbeschleuniger-Anordnungen sind beispielsweise bekannt aus DE 100 14 033 A1, DE 101 30 464 A1 oder der DE 198 28 704 A1.

Der vorliegenden Erfindung liegt die Aufgabe zugrunde, eine lonenbeschleuniger-Anordnung mit flexibel variierbarem Aufbauprinzip anzugeben.

Die Erfindung ist im Patentanspruch 1 beschrieben. Die abhängigen Ansprüche enthalten vorteilhafte Ausgestaltungen und Weiterbildungen der Erfindung.

Die Erfindung legt die an sich aus der DE 100 14 033 A1 bekannte Magnetfeldstruktur zugrunde. Die lonisationskammer weist in einer quer zur Längsrichtung verlaufenden Schnittebene eine einfach zusammenhängende Querschnittsfläche auf, d. h. ist ohne den die Kammer bei den ringförmigen lonisationskammern radial zur Mitte hin begrenzenden Mittelteil ausgeführt.

Die bewusste Abweichung von dem kreisförmigen Kammerquerschnitt und die Vergrößerung des Kammerquerschnitts in einer Querrichtung relativ zur Abmessung der Kammer in einer zweiten Querrichtung, vorzugsweise um wenigstens den Faktor 2, ermöglicht eine bedarfsweise weitgehend beliebige Skalierung des abgegebenen Ionenstroms bei Beibehaltung anderer Parameter der Anordnung. Die Anordnung weist insbesondere auch eine vorteilhafte Plasmadichte bezogen auf die Querschnittsfläche auf.

Die Erfindung ist nachfolgend anhand eines bevorzugten Beispiels unter Bezugnahme auf die Abbildungen noch eingehend veranschaulicht. Dabei zeigt:
Fig. 1 eine grundlegende Form einer Ionisationskammer,
Fig. 2 ein Schnittbild in z-x-Ebene,
Fig. 3 ein Schnittbild auszugsweise in x-y-Ebene,
Fig. 4 ein Schnittbild in y-z-Ebene.

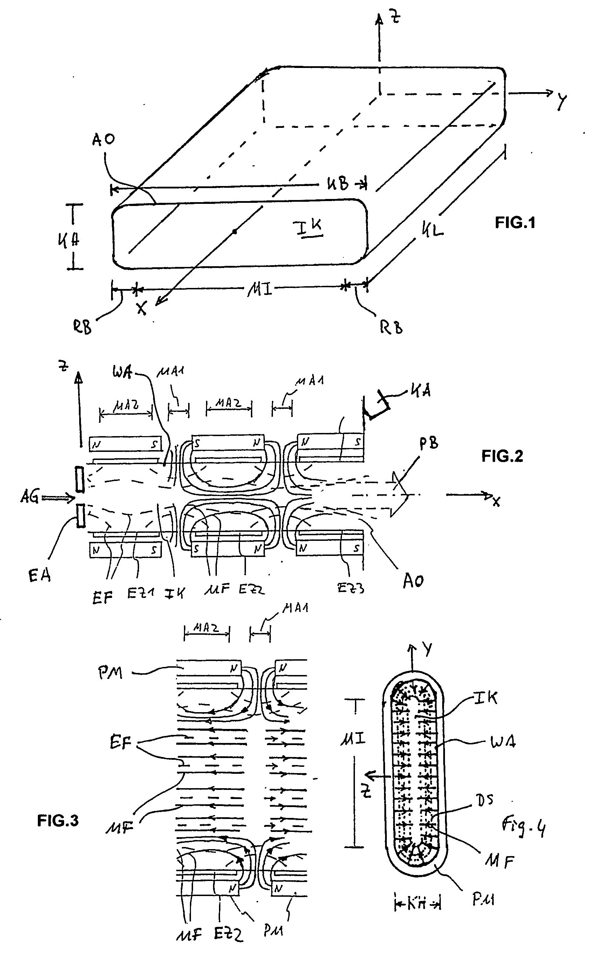

In der Schrägansicht nach Fig. 1 in Schrägansicht mit Blick von vom in die Ionenaustrittsöffnung AO ist eine grundlegende Form einer lonisationskammer IK zu einer erfindungsgemäßen Ionenbeschleuniger-Anordnung skizziert, welche der Einfachheit halber in dieser Skizze als annähernd quaderförmig mit einer Breite KB in y-Richtung, einer Höhe KH in z-Richtung und einer Länge KL in x-Richtung ausgeführt ist. Die Koordinatenachsen des Koordinatensystems sind in Richtung der Hauptachsen der Ionisationskammer gelegt. Der Koordinatenursprung sei am Fuß der Ionisationskammer bei der Anodenelektrode in Verlängerung der Mittellängsachse der Anordnung, welche im skizzierten Beispiel mit der x-Achse zusammenfalle, angeordnet. Die x-Richtung ist auch als Längsrichtung, die y- und die z-Richtung als Querrichtungen bezeichnet. Die lonisationskammer ist vorzugsweise spiegelsymmetrisch sowohl zur x-z-Ebene als auch spiegelsymmerisch zur x-y-Ebene.

Die in y-Richtung die Kammer begrenzenden Randabschnitte RB weisen vorzugsweise gegenüber der reinen Quaderform einen gerundeten Verlauf der Wandfläche der die Ionisationskammer begrenzenden Kammerwand auf. In einem in y-Richtung mittleren Bereich MI ist die Höhe KH der Kammer IK im wesentlichen konstant. Die Ionisationskammer ist aus Gründen der vereinfachten Erläuterung nachfolgend als im wesentlichen zylindrisch, d. h. mit in x-Richtung gleichbleibender Querschnittsfläche angenommen, ohne dass die Erfindung hierauf beschränkt sein soll. In Fig. 1 sind der Übersichtlichkeit halber die Elektrodenanordnung, die Magnetanordnung sowie der Verlauf der elektrischen und magnetischen Felder nicht eingezeichnet.

Aus der Schnittbilddarstellung der Fig. 2 in der x-z-Ebene des Koordinatensystems nach Fig. 1 ist insbesondere der typische Verlauf des an sich bekannten, als wesentlich zugrunde gelegten Magnetfelds in der Ionisationskammer anschaulich ersichtlich. Dieses Magnetfeld MF ist dadurch charakterisiert, dass in Längsrichtung (x) der Anordnung Längsabschnitte MA1 erster Art und Längsabschnitte MA2 zweiter Art aufeinanderfolgen, wobei in Längsabschnitten MA1 erster Art das Magnetfeld überwiegend parallel zur y-z-Ebene, d. h. senkrecht zur Längsrichtung und in Längsabschnitten MA2 zweiter Art überwiegend parallel zur Längsrichtung x verläuft. In Längsabschnitten erster Art findet in Längsrichtung eine Umkehr der Richtung der Längskomponente des Magnetfelds statt. Die Magnetfeldstruktur im Längsabschnitt MA1 erster Art wird auch als Cusp-Struktur bezeichnet. Die Längsabschnitte erster und zweiter Art können unmittelbar aneinander anschließen oder, wie in der Skizze, durch Zwischenabschnitte in Längsrichtung beabstandet sein. Die Magnetfeldlinien setzen sich von den Längsabschnitten erster Art kontinuierlich, gegebenenfalls durch die dazwischenliegenden Zwischenabschnitte, in den Längsabschnitt MA1 erster Art fort. Die Magnetanordnung bzw. das Magnetfeld ist vorteilhafterweise mehrstufig in der Art, dass das Magnetfeld in der lonisationskammer in Längsrichtung alternierend mehrere Längsabschnitte erster Art und mehrere Längsabschnitte zweiter Art mit den beschriebenen charakteristischen Feldverläufen aufweist. Das Magnetfeld MF kann in an sich bekannter Weise mittels Spulen und/oder Permanentmagneten PM erzeugt werden.

Die Elektrodenanordnung kann in an sich bekannter Weise eine bei der Ionenaustrittsöffnung AO der Ionisationskammer IK angeordnete Kathode KA und eine der Ionenaustrittsöffnung in x-Richtung entgegengesetzt angeordnete Anode EA enthalten. Vorteilhafterweise, insbesondere bei der bevorzugten mehrstufigen Ausführung der Magnetanordnung, können noch Zwischenelektroden EZ1, EZ2, EZ3 an der Wand WA der lonisationskammer vorgesehen sein, welche insbesondere auf festen oder gleitenden Zwischenpotentialen zwischen Anodenpotential und Kathodenpotential liegen können. Die Anode EA kann vorteilhafterweise wie skizziert an dem der Ionenaustrittsöffnung AO abgewandten Boden der Ionisationskammer angeordnet sein. Die Kathode KA ist in Fig. 2 in an sich bekannter Weise in Längsrichtung bei der Ionenaustrittsöffnung seitlich gegen diese versetzt angeordnet. Insbesondere kann die Kathode eine Elektronenquelle für in die lonisationskammer einzuleitende Primärelektronen zur Ionisation eines Arbeitsgases und/oder für dem austretenden lonenstrahl PB zur elektrischen Neutralisierung zuzufügende Elektronen dienen. Ein neutrales Arbeitsgas AG wird vorzugsweise im Bereich der Anode EA in die Ionisationskammer eingeleitet.

In anderer vorteilhafter Ausführung kann die Kathode als nicht Elektronen emittierende und somit nicht als Neutralisator und/oder als Primärelektronenquelle der Gasionisation dienende Elektrode ausgeführt sein Die Kathode kann dabei günstigerweise durch einen die Austrittsöffnung der lonisationskammer umgebenden und auf Kathodenpotential liegenden Gehäuseteil gegeben sein.

Unter dem Einfluss des in Fig. 2 mit unterbrochenen Linien schematisch eingezeichneten elektrostatischen Feldes EF der Elektrodenanordnung werden die Elektronen zur Anode und die positiv geladenen Gasionen zur lonenaustrittsöffnung hin beschleunigt, wobei die Elektronen unter dem Einfluss des Magnetfelds insbesondere in den Längsabschnitten MA1 erster Art des Magnetfelds ringförmig geschlossene Driftströme DS um die Längsrichtung bilden (Fig. 4). In der Fig. 3 ist ein Ausschnitt aus einem Schnittbild in der x-y-Ebene nach Fig. 1 mit der Darstellung eines typischen Magnetfeldverlaufs in diesem Bereich skizziert. Fig. 4 zeigt einen Schnitt in einer zur y-z-Ebene parallelen Schnittebene im Bereich eines Längsabschnitts MA1 mit Darstellung eines typischen Magnetfeldverlaufs und eines ringförmig geschlossenen Driftstroms DS. Der Umlaufsinn der Driftströme hängt von der radialen Richtung des Magnetfelds in den Längsabschnitten MA1 erster Art ab und wechselt jeweils zwischen in Längsrichtung aufeinanderfolgenden Längsabschnitten MA1 erster Art. In Fig. 4 ist zusätzlich die Magnetanordnung PM als die Kammer außenliegend umgebend skizziert, welche durch Spulen oder vorzugsweise durch Permanentmagnete gebildet sein kann. Elektrodenanordnung und/oder Magnetanordnung sind vorteilhafterweise in ihrer Geometrie an die gestreckte Querschnittsform der lonisationskammer angepasst.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Ionenbeschleuniger-Anordnung mit einer lonisationskammer, einer Magnetanordnung und einer Elektrodenanordnung und mit Mitteln zur Einleitung eines neutralen Arbeitsgases in die Ionisationskammer, wobei
- die Elektrodenanordnung in der Ionisationskammer ein überwiegend in Längsrichtung der Anordnung weisendes elektrostatisches Beschleunigungsfeld für positiv geladene Ionen erzeugt,
- die Magnetanordnung in der lonisationskammer ein Magnetfeld erzeugt, welches in Längsrichtung wenigstens einen Längsabschnitt erster Art mit überwiegend senkrecht zur Längsrichtung verlaufendem Magnetfeld und dem Längsabschnitt erster Art in Längsrichtung beidseitig benachbart je einen Längsabschnitt zweiter Art mit überwiegend zur LängsRichtung parallelem Verlauf des Magnetfelds aufweist,
- die lonisationskammer in Längsrichtung eine Ionenaustrittsöffnung aufweist und seitlich durch eine umlaufende Kammerwand begrenzt ist, **dadurch gekennnzeichnet, dass** senkrecht zur Längsrichtung der Kammerquerschnitt eine einfach zusammenhängende Querschnittsfläche bildet, welche in einer ersten Richtung (y) wenigstens doppelt so groß ist wie in einer dazu senkrechten zweiten Richtung (z).

2. Anordnung nach Anspruch 1, **dadurch gekennzeichnet, dass** in einem in erster Richtung (y) mittleren Bereich (MI) das Magnetfeld (MF), das elektrostatische Feld (EF) und die Abmessung (KH) des Kammerquerschnitts in der zweiten Richtung (z) annähernd konstant sind (KH(y)=konstant).

3. Anordnung nach Anspruch 1 oder Anspruch 2, **dadurch gekennzeichnet, dass** die Ionisationskammer bezüglich zweier orthogonaler Ebenen (x-y, x-z) spiegelsymmetrisch aufgebaut ist.

4. Anordnung nach einem der Ansprüche 1 bis 3, **dadurch gekennzeichnet, dass** eine Kathode (KA) als Elektronenquelle im Bereich der lonenaustrittsöffnung (AO) und seitlich von dieser beabstandet angeordnet ist.

5. Anordnung nach einem der Ansprüche 1 bis 3, **dadurch gekennzeichnet, dass** keine elektronenemittierende Kathode als Neutralisierungselektronenquelle und/oder Primärelektronenquelle zur Erzeugung des lonenstrahls vorgesehen ist.

## Claims

1. Ion accelerator arrangement with an ionization chamber, a magnet arrangement and an electrode arrangement and with means for introducing a neutral working gas into the ionization chamber, wherein
- the electrode arrangement generates in the ionization chamber an electrostatic acceleration field for positively charged ions which is oriented predominantly in the longitudinal direction of the arrangement,
- the magnet arrangement generates in the ionization chamber a magnetic field which has in the longitudinal direction at least one longitudinal portion of a first kind, with a magnetic field extending predominantly perpendicularly to the longitudinal direction, and, adjacent to the longitudinal portion of the first kind on each of both sides in the longitudinal direction, a longitudinal portion of a second kind, with an extent of the magnetic field that is predominantly parallel to the longitudinal direction,
- the ionization chamber has in the longitudinal direction an ion outlet opening and is bounded laterally by a circumferential chamber wall,
**characterized in that** a simply connected cross-sectional area which is at least twice as large in a first direction (y) as in a second direction (z) perpendicular thereto forms perpendicularly to the longitudinal direction of the chamber cross section.

2. Arrangement according to Claim 1, **characterized in that** the magnetic field (MF), the electrostatic field (EF) and the dimension (KH) of the chamber cross section in the second direction (z) are approximately constant (KH(y)=constant) in a middle region (MI) in the first direction (y).

3. Arrangement according to Claim 1 or Claim 2, **characterized in that** the ionization chamber is constructed mirror-symmetrically with respect to two orthogonal planes (x-y, x-z).

4. Arrangement according to one of Claims 1 to 3, **characterized in that** a cathode (KA) is arranged as an electron source in the region of the ion outlet opening (AO) and laterally at a distance therefrom.

5. Arrangement according to one of Claims 1 to 3, **characterized in that** no electron-emitting cathode is provided as a neutralization electron source and/or primary electron source for generating the stream of ions.

## Revendications

1. Système d'accélération d'ions qui présente une chambre d'ionisation, un système magnétique et un système d'électrodes ainsi que des moyens d'introduction d'un gaz neutre de travail dans la chambre d'ionisation,
le système d'électrodes formant dans la chambre d'ionisation un champ électrostatique d'accélération des ions à charge positive orienté principalement dans le sens de la longueur du système,
le système magnétique formant dans la chambre d'ionisation un champ magnétique dont l'évolution s'étend principalement à la perpendiculaire du sens de la longueur dans le sens de la longueur d'au moins une partie longitudinale de premier type et au voisinage des deux côtés du sens de la longueur de la partie longitudinale du premier type des parties longitudinales de deuxième type où le champ magnétique s'étend principalement en parallèle au sens de la longueur,
la chambre d'ionisation présentant dans le sens de la longueur une ouverture de sortie d'ions et étant délimitée latéralement par une paroi périphérique de chambre,
**caractérisé en ce que**
la section transversale de la chambre forme perpendiculairement au sens de la longueur une surface simple cohérente qui est au moins deux fois plus grande dans une première direction (y) que dans une deuxième direction (z) perpendiculaire à la première.

2. Système selon la revendication 1, **caractérisé en ce que** dans une partie (MI) située au centre dans la première direction (y), le champ magnétique (MF), le champ électrostatique (EF) et la dimension (KH) de la section transversale de la chambre sont sensiblement constantes dans la deuxième direction (z) (KH(y) = constante).

3. Système selon la revendication 1 ou la revendication 2, **caractérisé en ce que** la chambre d'ionisation présente une structure symétrique par rapport à deux plans orthogonaux (x-y, x-z).

4. Système selon l'une des revendications 1 à 3, **caractérisé en ce qu'**une cathode (KA) qui sert de source d'électrons est disposée au niveau de l'ouverture (AO) de sortie d'ions et à distance latérale de cette dernière.

5. Système selon l'une des revendications 1 à 3, **caractérisé en ce qu'**il ne présente pas de cathode d'émission d'électrons comme source d'électrons de neutralisation et/ou de source d'électrons primaires pour former le faisceau d'ions.
